# EUROPÄISCHE PATENTSCHRIFT

(11) **EP 2 247 864 B1**
(45) Veröffentlichungstag und Bekanntmachung des Hinweises auf die Patenterteilung: **12.12.2012**
(21) Anmeldenummer: 09717137.5
(22) Anmeldetag: 02.03.2009
(51) Int. Cl.: F16C 33/10, F16C 39/02

(54) **MASCHINE MIT FANGLAGER MIT GLEITSCHICHT AUS FLÜSSIGMETALL**
MACHINE COMPRISING A BACKUP BEARING WITH A LIQUID METAL ANTI-FRICTION LAYER
MACHINE MUNIE D UN PALIER D ACCUEIL AVEC UNE COUCHE DE GLISSEMENT EN MÉTAL LIQUIDE

(30) Priorität: 05.03.2008 DE 102008012603
(43) Veröffentlichungstag der Anmeldung: 10.11.2010
(73) Patentinhaber: Siemens Aktiengesellschaft, 80333 München (DE)
(72) Erfinder: WALTER, Hartmut, 107-0062 Tokyo (JP)
(86) Internationale Anmeldenummer: PCT/EP2009/052458
(87) Internationale Veröffentlichungsnummer: WO 2009/109548

(56) Entgegenhaltungen:
- DE-A1-102005 045 958
- DE-A1-102006 017 933

## Beschreibung

Die vorliegende Erfindung betrifft eine Maschine,
- wobei die Maschine einen Grundkörper, ein Drehelement und mindestens eine Lageranordnung aufweist,
- wobei die Lageranordnung ein Betriebslager und ein dem Betriebslager zugeordnetes Fanglager aufweist,
- wobei das Fanglager einen Grundkörperlagerring und einen relativ zum Grundkörperlagerring drehbar angeordneten Drehelementlagerring aufweist,
- wobei entweder der Grundkörperlagerring relativ zum Grundkörper drehfest angeordnet ist und der Drehelementlagerring im Normalbetrieb von dem Drehelement beabstandet ist oder der Drehelementlagerring relativ zum Drehelement drehfest angeordnet ist und der Grundkörperlagerring im Normalbetrieb von dem Grundkörper beabstandet ist,
- wobei in einem Normalbetrieb der Maschine das Drehelement relativ zum Grundkörper über das Betriebslager dauerhaft kontaktfrei drehbar gelagert ist, so dass der Drehelementlagerring relativ zum Grundkörperlagerring keine Drehbewegung ausführt,
- wobei in einem Sonderbetrieb der Maschine, in welchem das Drehmoment relativ zum Grundkörper nicht über das Betriebslager kontaktfrei drehbar gelagert ist, das Drehelement den Drehelementlagerring relativ zum Grundkörperlagerring in Drehung versetzt, so dass das Drehelement über das Fanglager zumindest kurzzeitig drehbar gelagert ist.

Derartige Maschinen sind - insbesondere in Form elektrischer Maschinen - allgemein bekannt. Rein beispielhaft wird auf die DE 10 2006 017 933 A1 verwiesen. Die Betriebslager können beispielsweise als Magnetlagerungen ausgebildet sein.

Aus der DE 10 2005 045 958 A1 ist ein Gleitlager für eine Röntgenröhre bekannt, bei dem im Lagerspalt ein Flüssigmetall angeordnet ist.

Bei manchen Anwendungen rotierender Maschinen sind Fanglager als Rückfallebene der Betriebslager erforderlich. Die Fanglager müssen zum einen den Stoß (Aufprall) beim Absturz des Drehelements in das Fanglager verkraften, zum anderen ein sicheres Auslaufen des Drehelements gewährleisten. Hierfür müssen bestimmte Reibungsverhältnisse vorhanden sein. Zu hohe Reibwerte zwischen den reibenden Bauteilen führen schnell zu einer starken Erwärmung innerhalb sehr kurzer Zeit, was wiederum eine geringe Standzeit des Fanglagers zur Folge hat. In den meisten Fällen ist daher ein ungebremstes Auslaufen des Drehelements in den Fanglagern nicht möglich. Statt dessen müssen zum sicheren Betrieb von Anlagen mit kontaktfreien Betriebslagern Bremseinrichtungen vorgesehen sein, welche das Drehelement gegebenenfalls sehr schnell abbremsen.

Für Fanglager sind verschiedene Ausgestaltungen bekannt. So ist beispielsweise bekannt, Fanglager als Wälzlager auszubilden. Hierbei ist einer der Lagerringe des Wälzlagers - in der Regel der Außenring - mit einem Lagerschild verbunden. Der Innendurchmesser des Innenrings des Lagers ist in diesem Fall etwas größer als der Außendurchmesser des Drehelements, soweit es durch den Innenring geführt ist. Beim Ausfall des Betriebslagers fällt das Drehelement in den Innenring. Nach sehr kurzer Zeit sind der Innenring und die Wälzkörper des Wälzlagers beschleunigt. Das Drehelement kann auslaufen. Ein als Wälzlager ausgebildetes Fanglager ist jedoch für hohe Gewichte des Drehelements ungeeignet. Bei hohen Gewichten werden daher Trockengleitlager verwendet. Bei Trockengleitlagern befinden sich auf dem Lagerinnenring und/oder dem Lageraußenring eine oder mehrere Bronzeschichten. Die Bronzeschichten werden jedoch relativ schnell verschlissen, so dass nach nur wenigen Auslaufvorgängen ein Austausch der Fanglager erforderlich ist.

Die Aufgabe der vorliegenden Erfindung besteht darin, eine Maschine der eingangs beschriebenen Art - insbesondere deren Fanglager - derart auszugestalten, dass die Fanglager eine hohe Standzeit aufweisen. Insbesondere soll die beim Auslaufen des Drehelements entstehende Reibungswärme weitestgehend vermieden werden oder anderweitig unschädlich gemacht werden.

Die Aufgabe wird durch eine Maschine mit den Merkmalen des Anspruchs 1 gelöst. Mögliche Ausgestaltungen sind Gegenstand der abhängigen Ansprüche 2 bis 9.

Gemäß Anspruch 1 ist vorgesehen, eine Maschine der eingangs genannten Art derart auszugestalten, dass zwischen dem Grundkörperlagerring und dem Drehelementlagerring eine als Flüssigmetall ausgebildete Gleitschicht angeordnet ist. Durch diese Ausgestaltung kann zum einen der Reibwiderstand deutlich reduziert werden. Zum anderen ergibt sich eine gute thermische Ankopplung des Drehelementlagerrings an den Grundkörperlagerring und umgekehrt, so dass dennoch entstehende Reibungswärme schnell abgeführt werden kann.

In der Regel ist der Grundkörperlagerring als Lageraußenring ausgebildet, der Drehelementlagerring als Lagerinnenring. In Einzelfällen ist jedoch auch eine umgekehrte Ausgestaltung möglich.

In einer bevorzugten Ausgestaltung der vorliegenden Erfindung ist zwischen dem drehfest angeordneten Lagerring (in der Regel dem als Lageraußenring ausgebildeten Grundkörperlagerring) und dem Element, bezüglich dessen der jeweilige Lagerring drehfest angeordnet ist (in der Regel dem Grundkörper) eine Federeinrichtung angeordnet, mittels derer ein beim Übergang vom Normalbetrieb in den Sonderbetrieb auftretender Aufprall abfederbar ist. Der Aufprall wird hierbei bei der üblichen Ausgestaltung durch ein Fallen des Drehelements in den als Lagerinnenring ausgebildeten Drehelementlagerring ausgelöst.

Alternativ oder zusätzlich zum Vorhanden sein der Federeinrichtung ist es möglich, dass der nicht drehfest angeordnete Lagerring (in der Regel der als Lagerinnenring ausgebildete Drehelementlagerring) eine federelastische Zwischenschicht aufweist, mittels derer der beim Übergang vom Normalbetrieb in den Sonderbetrieb auftretende Aufprall abfederbar ist.

Vorzugsweise weist das Fanglager eine Spaltdichtung auf, mittels derer das Flüssigmetall zurückgehalten wird. Durch diese relativ einfache Ausgestaltung ergibt sich eine besonders lange Lebensdauer des Fanglagers.

In der Regel wird bereits durch die Ausbildung der Gleitschicht als Flüssigmetall die Reibung stark reduziert, so dass im Sonderbetrieb nur eine geringe Erwärmung des Fanglagers auftritt. In Einzelfällen kann es jedoch dennoch sinnvoll sein, im Grundkörper und/oder im Grundkörperlagerring und/oder im Drehelement und/oder im Drehelementlagerring mindestens einen Block aus einem bei einer niedrigen Temperatur schmelzenden Metall anzuordnen. Der Block ist in diesem Fall thermisch derart mit dem Flüssigmetall gekoppelt, dass er im Sonderbetrieb schmilzt.

Weitere Vorteile und Einzelheiten ergeben sich aus der nachfolgenden Beschreibung eines Ausführungsbeispiels in Verbindung mit den Zeichnungen. Es zeigen in Prinzipdarstellung:
- FIG 1: schematisch eine Maschine,
- FIG 2: schematisch eine Lageranordnung in einem Normalbetrieb,
- FIG 3: die Lageranordnung von FIG 2 in einem Sonderbetrieb und
- FIG 4: ein Fanglager.

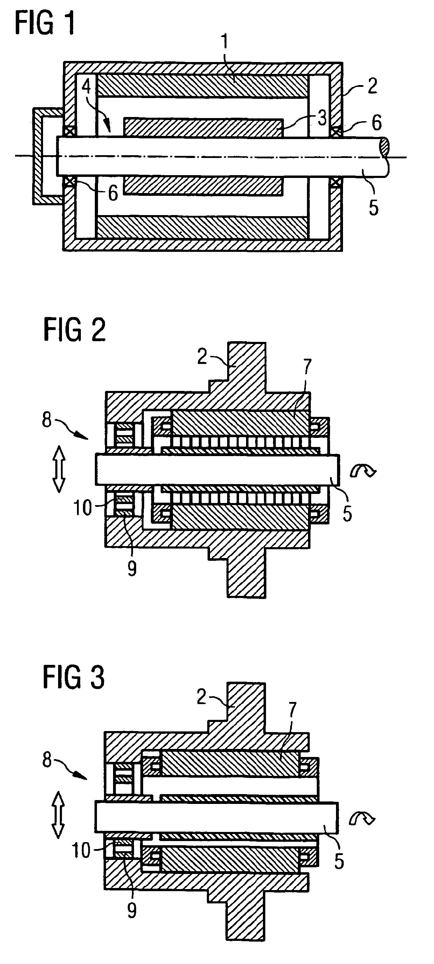

Gemäß FIG 1 ist eine Maschine als elektrische Maschine ausgebildet. Sie weist einen Stator 1 auf, der in einem Grundkörper 2 der Maschine angeordnet ist. Weiterhin weist sie einen Rotor 3 auf, der Bestandteil eines Drehelements 4 der Maschine ist. Das Drehelement 4 weist weiterhin eine Rotorwelle 5 auf, die in Lageranordnungen 6 gelagert ist. Gemäß FIG 1 sind hierbei mehrere Lageranordnungen 6 vorhanden. Eingezeichnet sind in FIG 1 zwei Lageranordnungen 6. Die Lageranordnungen 6 sind in der Regel gleich ausgebildet. Wenn mehr als zwei Lageranordnungen 6 vorhanden sind, ist dies jedoch nicht zwingend erforderlich.

Die obenstehend beschriebene Ausgestaltung der Maschine als elektrische Maschine ist rein beispielhaft. Alternativ könnte die Maschine beispielsweise als Kompressor oder als Getriebe ausgebildet sein.

Nachfolgend wird in Verbindung mit den FIG 2 und 3 der Aufbau einer der Lageranordnungen 6 näher erläutert.

Gemäß den FIG 2 und 3 weist die dargestellte Lageranordnung 6 ein Betriebslager 7 und ein Fanglager 8 auf. Das Fanglager 8 ist hierbei dem Betriebslager 7 zugeordnet. Das Fanglager 8 weist einen Grundkörperlagerring 9 und einen Drehelementlagerring 10 auf. Der Drehelementlagerring 10 ist relativ zum Grundkörperlagerring 9 drehbar angeordnet.

In einem Normalbetrieb der Maschine - siehe FIG 2 - ist das Drehelement 4 (genauer: die Rotorwelle 5) relativ zum Grundkörper 2 über das Betriebslager 7 dauerhaft kontaktfrei drehbar gelagert. Der Drehelementlagerring 10 führt daher relativ zum Grundkörperlagerring 9 keine Drehbewegung aus. In einem Sonderbetrieb der Maschine - siehe FIG 3 - ist hingegen das Drehelement 4 (genauer: die Rotorwelle 5) relativ zum Grundkörper 2 nicht über das Betriebslager 7 kontaktfrei drehbar gelagert. Stattdessen versetzt das Drehelement 4 den Drehelementlagerring 10 relativ zum Grundkörperlagerring 9 in Drehung. Hierfür ist unter anderem eine geeignete Abstimmung der Reibwerte erforderlich, die an den Kontaktflächen von der Rotorwelle 5 zum Drehelementlagerring 10, vom Drehelementlagerring 10 zum Grundelementlagerring 9 usw. auftreten. Diese Abstimmung ist Fachleuten bekannt und als solche nicht Gegenstand der vorliegenden Erfindung.

Im Sonderbetrieb ist das Drehelement 4 über das Fanglager 8 kontaktbehaftet drehbar gelagert. In Einzelfällen kann es möglich sein, dass der Sonderbetrieb über längere Zeit beibehalten werden kann. Im Regelfall ist es jedoch ausreichend, wenn der Sonderbetrieb nur kurzzeitig möglich ist. Denn der Sonderbetrieb ist im Regelfall nur erforderlich, wenn entweder das Betriebslager 7 (beispielsweise wegen Ausfall einer Stromversorgung von Elektromagneten des Betriebslagers 7) ausfällt und/oder das Drehelement 4 an- oder ausläuft.

Dargestellt in den FIG 2 und 3 ist die übliche Ausgestaltung des Fanglagers 8. Bei der üblichen Ausgestaltung ist der Grundkörperlagerring 9 als Lageraußenring ausgebildet. Der Drehelementlagerring 10 ist hiermit korrespondierend als Lagerinnenring ausgebildet. Weiterhin ist in der üblichen Ausgestaltung des Fanglagers 8 der Grundkörperlagerring 9 relativ zum Grundkörper 2 drehfest angeordnet. Der Drehelementlagerring 10 ist in dieser Ausgestaltung im Normalbetrieb (siehe FIG 2) von dem Drehelement 4 (bzw. der Rotorwelle 5) beabstandet. In Einzelfällen kann es jedoch sinnvoll sein, den Grundkörperlagerring 9 als Lagerinnenring auszubilden und hiermit korrespondierend den Drehelementlagerring 10 als Lageraußenring auszubilden. Alternativ oder zusätzlich kann es in Einzelfällen sinnvoll sein, den Drehelementlagerring 10 relativ zum Drehelement 4 drehfest anzuordnen (insbesondere auf der Rotorwelle 5 zu befestigen), so dass der Grundkörperlagerring 9 im Normalbetrieb von dem Grundkörper 2 beabstandet ist.

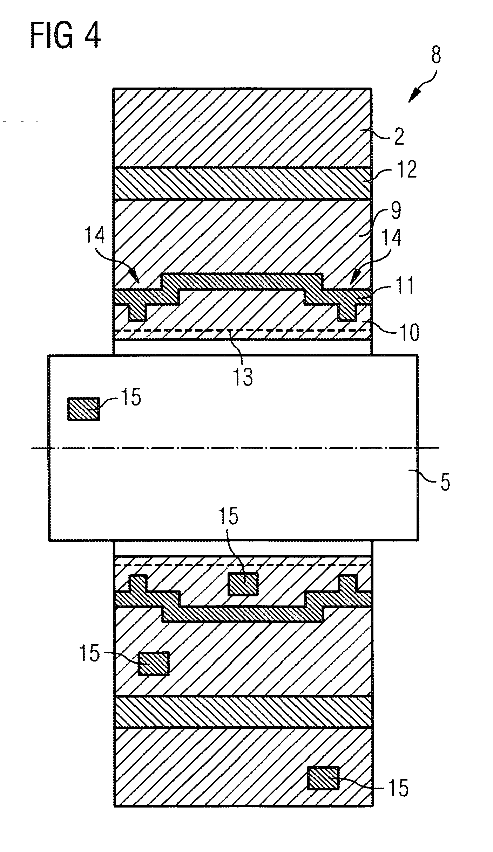

FIG 4 zeigt nun, ausgehend von der obenstehend beschriebenen typischen Ausgestaltung des Fanglagers 8, die erfindungsgemäße Ausgestaltung des Fanglagers 8. Gemäß FIG 4 ist zwischen dem Grundkörperlagerring 9 und dem Drehelementlagerring 10 eine Gleitschicht 11 angeordnet. Die Gleitschicht 11 ist hierbei als Flüssigmetall ausgebildet. Ein geeignetes Flüssigmetall ist beispielsweise unter dem Handelsnamen Galinstan bei der Firma Geratherm Medical AG, 98716 Geschenda (BRD) erhältlich. Es handelt sich um eine Gallium-Indium-Zinn-Verbindung.

Die obenstehend beschriebene Ausgestaltung des Fanglagers, also das Vorhandensein der als Flüssigmetall ausgebildeten Gleitschicht 11, kann in vielen Fällen schon ausreichend sein, um eine lange Standzeit des Fanglagers 8 zu bewirken. Die möglichen Ausgestaltungen des Fanglagers 8, die nachstehend in Verbindung mit FIG 4 näher erläutert werden, sind daher zwar vorteilhaft, nicht aber zwingend erforderlich.

Gemäß FIG 4 ist zwischen dem drehfest angeordneten Lagerring (hier: dem als Lageraußenring ausgebildeten Grundkörperlagerring 9) und dem Element, bezüglich dessen der jeweilige Lagerring drehfest angeordnet ist (hier: dem Grundkörper 2) eine Federeinrichtung 12 angeordnet. Die Federeinrichtung 12 kann beispielsweise als Elastomerschicht ausgebildet sein. Alternativ kann die Federeinrichtung 12 beispielsweise Federn umfassen. Mittels der Federeinrichtung 12 ist ein Aufprall abfederbar, der beim Übergang vom Normalbetrieb in den Sonderbetrieb (typischerweise beim Fallen des Drehelements 4 in das Fanglager 8) auftritt.

Alternativ oder zusätzlich zum Vorhandensein der Federeinrichtung 12 kann der nicht drehfest angeordnete Lagerring (in der Regel der als Lagerinnenring ausgebildete Drehelementlagerring 10) eine federelastische Zwischenschicht 13 aufweisen. Die federelastische Zwischenschicht 13 kann beispielsweise als Elastomer ausgebildet sein. Sie dient der gleichen Funktion wie die Federeinrichtung 12.

Gemäß FIG 4 weist das Fanglager 8 weiterhin eine Spaltdichtung 14 auf. Mittels der Spaltdichtung 14 wird das Flüssigmetall 11 zurückgehalten, so dass es nicht aus dem Zwischenraum zwischen dem Grundkörperlagerring 9 und dem Drehelementlagerring 10 austreten kann. Der Aufbau und die Wirkungsweise einer Spaltdichtung 14 ist Fachleuten allgemein bekannt, so dass nähere Ausführungen hierzu nicht erforderlich sind.

Auf Grund des Vorhandenseins der als Flüssigmetall ausgebildeten Gleitschicht 11 werden Reibungskräfte deutlich reduziert. Üblicherweise besteht daher nicht die Gefahr einer Überhitzung des Fanglagers 8 im Sonderbetrieb. In Einzelfällen kann es jedoch dennoch sinnvoll sein, entsprechend FIG 4 einen oder mehrere Blöcke 15 aus einem bei einer niedrigen Temperatur schmelzenden Metall vorzusehen und den Block 15 bzw. die Blöcke 15 derart thermisch mit dem Flüssigmetall 11 zu koppeln, dass der Block 15 im Sonderbetrieb schmilzt bzw. die Blöcke 15 im Sonderbetrieb schmelzen. Derartige Metalle sind bekannt und als solche nicht Gegenstand der vorliegenden Erfindung.

Die Anordnung des Blocks 15 bzw. der Blöcke 15 kann nach Bedarf vorgenommen werden. Insbesondere ist eine Anordnung im Grundkörper 2, im Grundkörperlagerring 9, im Drehelement 4 (bzw. der Rotorwelle 5) und im Drehelementlagerring 10 möglich. Auch beliebige Kombinationen hiervon sind möglich.

Die vorliegende Erfindung weist viele Vorteile auf. Insbesondere wird durch die Verwendung der als Flüssigmetall ausgebildeten Gleitschicht 11 ein verschleißfreies, robustes und wartungsfreundliches Fanglager 8 geschaffen, das für nahezu alle Gewichtsklassen des Drehelements 4 geeignet ist. Durch die Verwendung der Federeinrichtung 12 und/oder der federelastischen Zwischenschicht 13 wird weiterhin eine stoßartige Belastung beim Übergang vom Normalbetrieb in den Sonderbetrieb vermieden, wodurch die Belastung des Fanglagers 8 noch weiter reduziert wird. Durch den extrem niedrigen Reibungswert entsteht sogar bei Betrieb mit hohen Drehzahlen und hohen Gewichten des Drehelements 4 kaum Reibungswärme. Die Standzeit des Fanglagers 8 erhöht sich signifikant.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Maschine,
- wobei die Maschine einen Grundkörper (2), ein Drehelement (4) und mindestens eine Lageranordnung (6) aufweist,
- wobei die Lageranordnung (6) ein Betriebslager (7) und ein dem Betriebslager (7) zugeordnetes Fanglager (8) aufweist,
- wobei das Fanglager (8) einen Grundkörperlagerring (9) und einen relativ zum Grundkörperlagerring (9) drehbar angeordneten Drehelementlagerring (10) aufweist,
- wobei entweder der Grundkörperlagerring (9) relativ zum Grundkörper (2) drehfest angeordnet ist und der Drehelementlagerring (10) im Normalbetrieb von dem Drehelement (4) beabstandet ist oder der Drehelementlagerring (10) relativ zum Drehelement (4) drehfest angeordnet ist und der Grundkörperlagerring (9) im Normalbetrieb von dem Grundkörper (2) beabstandet ist,
- wobei in einem Normalbetrieb der Maschine das Drehelement (4) relativ zum Grundkörper (2) über das Betriebslager (7) dauerhaft kontaktfrei drehbar gelagert ist, so dass der Drehelementlagerring (10) relativ zum Grundkörperlagerring (9) keine Drehbewegung ausführt,
- wobei in einem Sonderbetrieb der Maschine, in welchem das Drehelement (4) relativ zum Grundkörper (2) nicht über das Betriebslager (7) kontaktfrei drehbar gelagert ist, das Drehelement (4) den Drehelementlagerring (10) relativ zum Grundkörperlagerring (9) in Drehung versetzt, so dass das Drehelement (4) über das Fanglager (8) zumindest kurzzeitig drehbar gelagert ist,
**dadurch gekennzeichnet,**
**dass** zwischen dem Grundkörperlagerring (9) und dem Drehelementlagerring (10) eine als Flüssigmetall ausgebildete Gleitschicht (11) angeordnet ist.

2. Maschine nach Anspruch 1,
**dadurch gekennzeichnet,**
**dass** der Grundkörperlagerring (9) als Lageraußenring ausgebildet ist und dass der Drehelementlagerring (10) als Lagerinnenring ausgebildet ist.

3. Maschine nach Anspruch 1,
**dadurch gekennzeichnet,**
**dass** der Grundkörperlagerring (9) als Lagerinnenring ausgebildet ist und dass der Drehelementlagerring (10) als Lageraußenring ausgebildet ist.

4. Maschine nach Anspruch 1, 2 oder 3,
**dadurch gekennzeichnet,**
**dass** zwischen dem drehfest angeordneten Lagerring (9) und dem Element (2), bezüglich dessen der jeweilige Lagerring (9) drehfest angeordnet ist, eine Federeinrichtung (12) angeordnet ist, mittels derer ein beim Übergang vom Normalbetrieb in den Sonderbetrieb auftretender Aufprall abfederbar ist.

5. Maschine nach Anspruch 1, 2, 3 oder 4,
**dadurch gekennzeichnet,**
**dass** der nicht drehfest angeordnete Lagerring (10) eine federelastische Zwischenschicht (13) aufweist, mittels derer ein beim Übergang vom Normalbetrieb in den Sonderbetrieb auftretender Aufprall abfederbar ist.

6. Maschine nach einem der obigen Ansprüche,
**dadurch gekennzeichnet,**
**dass** das Fanglager (8) eine Spaltdichtung (14) aufweist, mittels derer das Flüssigmetall (11) zurückgehalten wird.

7. Maschine nach einem der obigen Ansprüche,
**dadurch gekennzeichnet,**
**dass** im Grundkörper (2) und/oder im Grundkörperlagerring (9) und/oder im Drehelement (4) und/oder im Drehelementlagerring (10) mindestens ein Block (15) aus einem bei einer niedrigen Temperatur schmelzenden Metall angeordnet ist und dass der Block (15) derart thermisch mit dem Flüssigmetall (11) gekoppelt ist, dass er im Sonderbetrieb schmilzt.

## Claims

1. Machine,
- the machine having a basic body (2), a rotary element (4) and at least one bearing arrangement (6),
- the bearing arrangement (6) having an operating bearing (7) and a backup bearing (8) assigned to the operating bearing (7),
- the backup bearing (8) having a basic-body bearing ring (9) and a rotary-element bearing ring (10) arranged rotatably in relation to the basic-body bearing ring (9),
- either the basic-body bearing ring (9) being arranged fixedly in terms of rotation in relation to the basic body (2), and in normal operation the rotary-element bearing ring (10) being, or spaced apart from the rotary element (4) the rotary-element bearing ring (10) being arranged fixedly in terms of rotation in relation to the rotary element (4), and in normal operation the basic-body bearing ring (9) being spaced apart from the basic body (2),
- in normal operation of the machine the rotary element (4) being mounted rotatably, permanently free of contact, in relation to the basic body (2) via the operating bearing (7), so that the rotary-element bearing ring (10) executes no rotational movement in relation to the basic-body bearing ring (9),
- in special operation of the machine, in which the rotary element (4) is not mounted rotatably, free of contact, in relation to the basic body (2) via the operating bearing (7), the rotary element (4) setting the rotary-element bearing ring (10) in rotation in relation to the basic-body bearing ring (9), so that the rotary element (4) is mounted rotatably, at least briefly, via the backup bearing (8),
**characterized**
**in that** an anti-friction layer (11) formed as liquid metal is arranged between the basic-body bearing ring (9) and the rotary-element bearing ring (10).

2. Machine according to Claim 1,
**characterized**
**in that** the basic-body bearing ring (9) is designed as a bearing outer ring, and in that the rotary-element bearing ring (10) is designed as a bearing inner ring.

3. Machine according to Claim 1,
**characterized**
**in that** the basic-body bearing ring (9) is designed as a bearing inner ring, and in that the rotary-element bearing ring (10) is designed as a bearing outer ring.

4. Machine according to Claim 1, 2 or 3,
**characterized**
**in that** a spring device (12) is arranged between the bearing ring (9) arranged fixedly in terms of rotation and the element (2), in relation to which the respective bearing ring (9) is arranged fixedly in terms of rotation, by means of which spring device an impact occurring during the transition from normal operation to special operation can be cushioned.

5. Machine according to Claim 1, 2, 3 or 4,
**characterized**
**in that** the bearing ring (10) not arranged fixedly in terms of rotation has a spring-elastic intermediate layer (13), by means of which an impact occurring during the transition from normal operation to special operation can be cushioned.

6. Machine according to one of the above claims,
**characterized**
**in that** the backup bearing (8) has a gap seal (14), by means of which the liquid metal (11) is retained.

7. Machine according to one of the above claims,
**characterized**
**in that** at least one block (15) composed of a metal which melts at a low temperature is arranged in the basic body (2) and/or in the basic-body bearing ring (9) and/or in the rotary element (4) and/or in the rotary-element bearing ring (10), and in that the block (15) is coupled thermally to the liquid metal (11) in such a way that it melts during special operation.

## Revendications

1. Machine,
- dans laquelle la machine a un corps (2) de base, un élément (4) tournant et au moins un dispositif (6) de palier,
- dans laquelle le dispositif (6) de palier a un palier (7) de service et un palier (8) d'accueil associé au palier (7) de service,
- dans laquelle le palier (8) d'accueil a une bague (9) de palier de corps de base et une bague (10) de palier d'élément tournant montée tournante par rapport à la bague (9) de palier du corps de base,
- dans laquelle ou bien la bague (9) de palier du corps de base est montée fixe en rotation par rapport au corps (2) de base et la bague (10) de palier de l'élément tournant est en fonctionnement normal à distance de l'élément (4) tournant, ou bien la bague (10) de palier de l'élément tournant est montée fixe en rotation par rapport à l'élément (4) tournant et la bague (9) de palier du corps de base est en fonctionnement normal à distance du corps (2) de base,
- dans laquelle, lorsque la machine fonctionne normalement, l'élément (4) tournant est monté tournant sans contact en permanence par rapport au corps (2) de base par le palier (7) de service, de sorte que la bague (10) de palier de l'élément tournant n'exécute pas de mouvement de rotation par rapport à la bague (9) de palier du corps de base,
- dans laquelle, dans un fonctionnement particulier de la machine, dans lequel l'élément (4) tournant est monté tournant sans contact par rapport au corps (2) de base, mais sans l'être par le palier (7) de service, l'élément (2) tournant de la bague (10) de palier de l'élément tournant est décalé en rotation par rapport à la bague (9) de palier du corps de base, de sorte que l'élément (4) tournant est monté tournant au moins brièvement par le palier (8) d'accueil,
**caractérisée**
**en ce qu'**une couche (11) de glissement en métal liquide est disposée entre la bague (9) de palier du corps de base et la bague (10) de palier de l'élément tournant.

2. Machine suivant la revendication 1,
**caractérisée**
**en ce que** la bague (9) de palier du corps de base est constituée en bague extérieure de palier et en ce que la bague (10) de palier de l'élément tournant est constituée en bague intérieure de palier.

3. Machine suivant la revendication 1,
**caractérisée en ce que** la bague (9) de palier du corps de base est constituée en bague intérieure de palier et **en ce que** la bague (10) de palier de l'élément tournant est constituée en bague extérieure de palier.

4. Machine suivant la revendication 1, 2 ou 3,
**caractérisée**
**en ce qu'**entre la bague (9) de palier montée fixe en rotation et l'élément (2) par rapport auquel la bague (9) de palier respective est montée fixe en rotation est disposé un dispositif (12) à ressort, au moyen duquel un rebondissement se produisant lors du passage du fonctionnement normal au fonctionnement particulier peut être amorti.

5. Machine suivant la revendication 1, 2, 3 ou 4,
**caractérisée**
**en ce que** la bague (10) de palier, qui n'est pas disposée fixe en rotation, a une couche (13) intermédiaire qui a une élasticité de ressort et au moyen de laquelle un rebondissement se produisant lors du passage du fonctionnement normal au fonctionnement particulier peut être amorti.

6. Machine suivant l'une des revendications précédentes,
**caractérisée**
**en ce que** le palier (8) d'accueil a une étanchéité (14) à fente, au moyen de laquelle le métal (11) liquide est retenu.

7. Machine suivant l'une des revendications précédentes,
**caractérisée**
**en ce que**, dans le corps (2) de base et/ou dans la bague (9) de palier du corps de base et/ou dans l'élément (4) tournant et/ou dans la bague (10) de palier de l'élément tournant, est disposé au moins un bloc (15) en un métal fondant à une température basse et en ce que le bloc (15) est couplé thermiquement au métal (11) liquide, de manière à ce qu'il fonde dans le fonctionnement particulier.
